Europäisches Patentamt

European Patent Office

Office européen des brevets

(11) Veröffentlichungsnummer: **0 027 864**
A1

# EUROPÄISCHE PATENTANMELDUNG

(21) Anmeldenummer: 80104799.4

(51) Int. Cl.³: **B 60 J 1/20**

(22) Anmeldetag: 14.08.80

(30) Priorität: 26.10.79 DE 2943249

(43) Veröffentlichungstag der Anmeldung: 06.05.81
Patentblatt 81/18

(84) Benannte Vertragsstaaten: **AT BE CH DE FR GB IT LI LU NL SE**

(71) Anmelder: **Justin Hüppe GmbH, Cloppenburger Strasse 200, D-2900 Oldenburg (DE)**

(72) Erfinder: **Alt, Wolf-Dieter, Dipl.-Ing., Am Tegelbusch 47, D-2900 Oldenburg (DE)**

(74) Vertreter: **Eisenführ & Speiser, Eduard-Grunow-Strasse 27, D-2800 Bremen 1 (DE)**

(54) **Selbstaufrollende Rollos für Pkw-Fenster.**

(57) Bei Personenkraftwagen mit einer Karosserie, die im Bereich der Fahrzeugseitenwände Doppelwandabschnitte (2) enthält, sind Fensteröffnungen (4) mit festen oder versenkbaren Fensterscheiben (24) verschließbar. Zwischen den Wänden mindestens eines Doppelwandabschnitts ist der Fensteröffnung (4) benachbart ein selbstaufrollendes Rollo (18) angeordnet. Der Behang des Rollos wird durch einen Spalt (11) der Fensteröffnung benachbart aus dem Doppelwandabschnitt (2) herausgeführt und läßt sich vor die Fensteröffnung (4) spannen, um den Lichteinfall in den Innenraum des Personenkraftwagens zu verringern.

0027864

BESCHREIBUNG

Die Erfindung betrifft einen Personenkraftwagen mit einer Karosserie, die im Bereich der Fahrzeugseitenwände Doppelwandabschnitte mit Fensteröffnungen enthält, die mit festen oder versenkbaren Fensterscheiben verschließbar sind.

Die Karosserie von Personenkraftwagen enthält im Bereich des Fahrzeuginnenraums an den Seitenwänden, z.B. auch in der Fahrzeugtür, Öffnungen, die durch feste oder versenkbare Fensterscheiben verschließbar sind. Mindestens um Teile dieser Öffnungen herum ist die Karosserie doppelwandig ausgebildet.

Es ist oftmals wünschenswert, direkte Sonneneinstrahlung in den Fahrzeuginnenraum durch die geöffneten oder geschlossenen Fenster hindurch zu verhindern, um das Aufheizen des Fahrzeuginnenraums in der Sommerzeit, bzw. die direkte Sonneneinstrahlung auf die Fahrzeuginsassen möglichst zu verringern, und um den Fahrzeuginnenraum teilweise abdunkeln zu können.

Aufgabe der Erfindung ist es daher, einen Personenkraftwagen der eingangs genannten Art anzugeben, bei dem eine direkte Sonneneinstrahlung durch die Fensteröffnungen der Karosserie weitgehend verhindert wird, und eine Teilabdunkelung des Fahrzeuginnenraums ermöglicht wird.

0027864

Diese Aufgabe wird erfindungsgemäß dadurch gelöst, daß zwischen den Wänden mindestens eines Doppelwandabschnitts der Fensteröffnung benachbart ein selbstaufrollendes Rollo angeordnet ist, dessen Behang durch einen Spalt in der Öffnungskante aus dem Doppelwandabschnitt herausführbar und vor die Fensteröffnung spannbar ist.

Die Vorteile der Erfindung liegen insbesondere darin, daß die Fensteröffnungen in der Karosserie eines Personenkraftwagens durch den Behang eines Rollos abdeckbar sind, welches insbesondere bei geöffneten Fenstern die Sonneneinstrahlung reflektiert, den Fahrzeuginnenraum abdunkelt und dennoch das gewünschte Maß an Frischluft in den Fahrzeuginnenraum eintreten läßt. Dadurch werden die Fahrzeuginsassen zuverlässig vor zu starkem Lichteinfall und direkter Sonneneinstrahlung geschützt, die insbesondere bei langsam fahrenden oder stillstehenden Personenkraftwagen in der Sommerzeit unangenehm sein kann. Da das selbstaufrollende Rollo zwischen den Wänden der Doppelwandabschnitte angeordnet ist, sind das Rollo sowie die entsprechenden Befestigungsmittel dezent verborgen und beeinträchtigen die Platzverhältnisse sowie die ästhetische Gestaltung des Fahrzeuginnenraums nicht.

Das Rollo ist bevorzugt entweder der oberen oder der unteren Fensterkante benachbart im wesentlichen horizontal zwischen den Wänden der Karosserie angeordnet.

Der Behang des Rollos erstreckt sich im wesentlichen über die gesamte Breite der jeweiligen zu bespannenden Fensteröffnung. Der Behang des Rollos weist an seiner freien Endkante bevorzugt eine Zugstange auf, deren beiden Enden in seitlichen Führungen geführt werden können. Die freie Endkante des Behangs ist lösbar an einer Kante der Öffnung einhängbar, die dem Spalt, aus dem der Behang austritt, gegenüberliegt.

Der Behang des Rollos besteht bevorzugt aus einem luftdurchlässigen Material, er ist besonders bevorzugt perforiert. Dadurch ist sichergestellt, daß sich auch die geöffnete Fensteröffnung mit dem Behang des Rollos bespannen läßt, ohne daß der Behang durch die beim Fahren vorhandene Luftströmung unerwünscht stark flattert. Es ist dadurch möglich, einerseits die direkte Sonneneinstrahlung vom Fahrzeuginnenraum abzuhalten und andererseits genügend Frischluft in den Fahrzeuginnenraum hinein zu lassen.

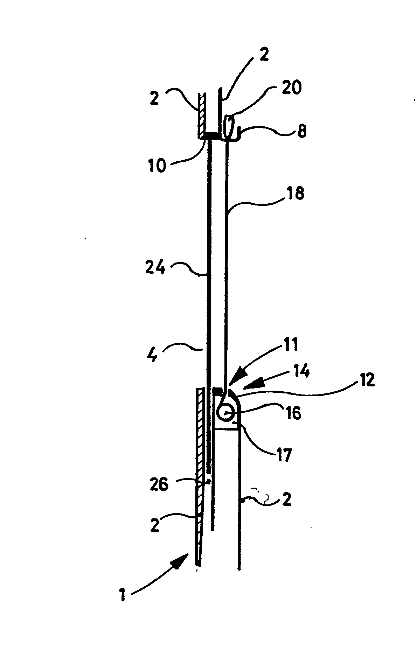

Im folgenden wird ein Ausführungsbeispiel der Erfindung anhand der Zeichnung näher erläutert.

Die Figur zeigt einen Querschnitt durch die Seitenwand eines Personenkraftwagens im Bereich eines zu öffnenden Fensters 24. Die Seitenwand 2 der Karosserie 1 besitzt eine Fensteröffnung 4, die mit dem Fenster 24 verschlossen ist, das in einem Spalt 26 absenkbar ist und in geschlossenem Zustand gegen die obere Schließkante 10 der Fensteröffnung 4 anliegt.

Auf der Seite des Fahrzeuginnenraums ist in der Unterkante der Fensteröffnung 4 ein Montageraum 17 vorgesehen, in dem das selbstaufrollende Rollo 14 mit im wesentlichen horizontaler Wickelwelle 16 aufgenommen ist. Der Montageraum 17 zwischen den Wänden 2 des Doppelwandabschnitts 3 der Karosserie 1 besitzt an seinem oberen Ende einen Spalt 11, durch den der Behang 18 des Rollos 14 hindurchgeführt ist. Der Behang 18 besitzt an seinem freien Ende eine Zugstange 20, die in Einrastelemente 8 einhängbar ist, welche an der der Unterkante 12 der Fensteröffnung gegenüberliegenden Kante 10 im Fahrzeuginnenraum angeordnet ist. Das Rollo 14 ist breiter als die Fensterscheibe 24, so daß der Behang 18 das gesamte Fenster abdeckt.

Die Seitenkanten des Behangs 18 lassen sich flächig mit einer Magnetfolie belegen. An der Karosserie sind Haftwulste aus magnetisierbarem Material anbringbar, die als Auflager für die mit Magnetfolie belegten Seitenkanten des Behangs 18 dienen. Dadurch werden die Seitenkanten des Behangs 18 auch bei stärkerer Luftströmung und Turbulenz im Bereich der Fensteröffnung 4 im ausgezogenen Zustand des Behangs in einer definierten Lage gehalten, wodurch fahrtwindbedingte Flatterbewegungen und -geräusche des Behangs 18 maßgeblich verringert werden.

Der Durchmesser der Wickelwelle läßt sich gegenüber den im Hausbereich bekannten selbstaufrollenden Rollos dadurch wesentlich verringern, daß der Federmotor, gegen dessen Federkraft der Behang von der Wickelwelle abgezogen wird, und unter dessen Federkraft der Behang wieder auf die Wickelwelle aufgewickelt wird, außerhalb der Wickelwelle angeordnet wird. Der Federmotor läßt sich in Verlängerung der Achse der Wickelwelle 16 in die Karosserie 1 - z.B. mit einem eigenen Gehäuse - einsetzen.

0027864

------------------------------------------------------------

Personenkraftwagen

------------------------------------------------------------


ANSPRÜCHE


1. Personenkraftwagen mit einer Karosserie, die im Bereich der Fahrzeugseitenwände Doppelwandabschnitte mit Fensteröffnungen enthält, die mit festen oder versenkbaren Fensterscheiben verschließbar sind, dadurch gekennzeichnet, daß zwischen den Wänden (2) mindestens eines Doppelwandabschnitts (3) der Fensteröffnung (4) benachbart ein selbstaufrollendes Rollo (14) angeordnet ist, dessen Behang (18) durch einen Spalt (11) in der Öffnungskante (12) aus dem Doppelwandabschnitt (3) herausführbar und vor die Fensteröffnung (4) spannbar ist.


2. Personenkraftwagen nach Anspruch 1, dadurch gekennzeichnet, daß das Rollo (14) der oberen oder unteren Fensterkante (12, 13) benachbart im wesentlichen horizontal zwischen den Wänden (2) der Karosserie angeordnet ist.

3. Personenkraftwagen nach Anspruch 1 oder 2, dadurch gekennzeichnet, daß sich der Behang (18) des Rollos (14) im wesentlichen über die gesamte Breite der Fensteröffnung (4) erstreckt.

4. Personenkraftwagen nach einem der Ansprüche 1, 2 oder 3, dadurch gekennzeichnet, daß der Behang (18) des Rollos (14) an seiner freien Endkante eine Zugstange (20) enthält, deren beide Enden in seitlichen Führungen geführt sind.

5. Personenkraftwagen nach einem der vorstehenden Ansprüche, dadurch gekennzeichnet, daß die freie Endkante des Behangs (18) an der dem Spalt (11) gegenüberliegenden Kante (13) der Fensteröffnung lösbar einkuppelbar ist.

6. Personenkraftwagen nach einem der vorstehenden Ansprüche, dadurch gekennzeichnet, daß der Behang (18) des Rollos (14) aus einem luftdurchlässigen Material besteht.

7. Personenkraftwagen nach einem der vorstehenden Ansprüche, dadurch gekennzeichnet, daß der Behang (18) des Rollos (14) perforiert ist.

8. Personenkraftwagen nach einem der vorstehenden Ansprüche, dadurch gekennzeichnet, daß die Seitenkanten des Behangs (18) mit einer Magnetfolie belegt sind,
und daß die seitlichen Kanten der Fensteröffnung (4)
oder seitlichen Führungen      einen Haftwulst aus
magnetisierbarem Material als Auflager für die Seitenkanten des Behangs (18) besitzen.

9.    Personenkraftwagen nach einem der vorstehenden
Ansprüche, dadurch gekennzeichnet, daß die Wickelwelle
(16) des selbstaufrollenden Rollos (14) mit einem
außerhalb der Wickelwelle (16) angeordneten Federmotor
betreibbar ist.

10.    Personenkraftwagen nach Anspruch 9, dadurch gekennzeichnet, daß der Federmotor in  Verlängerung der
Achse der Wickelwelle (16) in der Karosserie (1)
eingesetzt ist.

| Kategorie | EINSCHLÄGIGE DOKUMENTE Kennzeichnung des Dokuments mit Angabe, soweit erforderlich, der maßgeblichen Teile | betrifft Anspruch | KLASSIFIKATION DER ANMELDUNG (Int. Cl.³) |
|---|---|---|---|
| | US - A - 1 553 388 (MAHOOD) * Insgesamt, insbesondere Abbildungen 1,2 * | 1-4 | B 60 J 1/20 |
| | FR - A - 2 244 901 (CHAO YIU KUAN) * Ansprüche 1,3,5,6 * | 1,9,10 | |
| | US - A - 1 638 610 (BAKER) * Insgesamt * | 1,6,7 | |
| | DE - C - 557 486 (MORTENSEN) * Insbesondere Abbildung 3 * | 1 | RECHERCHIERTE SACHGEBIETE (Int. Cl.³) B 60 J |
| | US - A - 1 759 311 (IKE et al.) * Insbesondere Abbildung 9 * | 1 | |
| | US - A - 1 476 336 (HITCHINGS) * Insbesondere Abbildung 1 * | 1,6,7 | |
| A | FR - A - 2 429 317 (ET. FARNIER ET PENIN) | 1 | |
| A | GB - A - 259 519 (TYLER BRYAN BARRETT) | 1 | |
| A,P | DE - A - 2 841 218 (HÜPPE) | 1 | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort Den Haag | Abschlußdatum der Recherche 28-01-1981 | Prüfer SCHMAL |
|---|---|---|

EPA form 1503.1 06.78